# EUROPÄISCHE PATENTSCHRIFT

(11) **EP 4 341 569 B1**
(45) Veröffentlichungstag und Bekanntmachung des Hinweises auf die Patenterteilung: **22.10.2025**
(21) Anmeldenummer: 22723451.5
(22) Anmeldetag: 20.04.2022
(51) Int. Cl.: F16D 1/116, F16B 21/18

(54) **WELLE-NABE-VERBINDUNG UND BREMSANORDNUNG MIT EINER WELLE-NABE-VERBINDUNG**
SHAFT-HUB CONNECTION AND BRAKE ASSEMBLY HAVING A SHAFT-HUB CONNECTION
CONNEXION ARBRE-MOYEU ET ENSEMBLE DE FREINAGE DOTÉ D'UNE CONNEXION ARBRE-MOYEU

(30) Priorität: 17.05.2021 DE 102021002549
(43) Veröffentlichungstag der Anmeldung: 27.03.2024
(73) Patentinhaber: SEW-EURODRIVE GmbH & Co. KG, 76646 Bruchsal (DE)
(72) Erfinder: ASCHOFF, Stefan, 76227 Karlsruhe (DE); FICHTNER-PFLAUM, Gerolf, 76703 Kraichtal-Unteröwisheim (DE)
(86) Internationale Anmeldenummer: PCT/EP2022/060449
(87) Internationale Veröffentlichungsnummer: WO 2022/242977

(56) Entgegenhaltungen:
- WO-A1-2009/116615
- WO-A1-2011/058000
- WO-A1-2018/174844
- WO-A1-96/05101
- DE-A1- 102018 131 836
- DE-B3- 102006 010 656
- US-A- 5 361 740
- US-A1- 2012 076 576

## Beschreibung

Die Erfindung betrifft eine Welle-Nabe-Verbindung und Bremsanordnung mit einer Welle-Nabe-Verbindung.

Es ist allgemein bekannt, dass bei einer Welle-Nabe-Verbindung die Welle mit der Nabe drehfest verbunden werden.

**Aus der** DE 10 2011 121 790 A1 **ist eine Zahnkupplung mit einer Federung, Bremse und Anlage bekannt.**

**Aus der** US 4 136 982 A **ist eine zentrierte Verbindunganordnung bekannt.**

**Aus der** US 2 800 800 A **ist eine Antiratteranordnung bekannt.**

**Aus der** DE 10 2006 010 656 B3 **ist eine Federdruckbremse mit einer an einander abgewandten Seiten Reibflächen aufweisenden Bremsscheibe bekannt.**

**Aus der** WO 96/05101 A1 **ist eine Montieranordnung für Propeller bekannt.**

**Aus der** WO 2011/058000 A1 **ist als nächstliegender Stand der Technik eine Vorrichtung zum Koppeln einer Antriebswelle eines Nebenaggregats eines Nutzfahrzeugs mit einem Räderantrieb bekannt.**

**Aus der** DE 10 2018 131836 A1 **ist eine Getriebeanordnung bekannt.**

**Aus der** WO 2018/174844 A1 **ist eine Hydraulikspannanordnung bekannt.**

**Aus der** WO 2009/116615 A1 **ist ein Drahtring bekannt.**

**Aus der** US 2012/076576 A1 **ist eine Federdruckbremse mit einer an von einander abgewandten Seiten Reibflächen aufweisenden Bremsscheibe bekannt.**

**Aus der** US 5 361 740 A **ist eine mechanische Anordnung mit gehärteten Lageroberflächen bekannt.**

Der Erfindung liegt daher die Aufgabe zugrunde, eine Welle-Nabe-Verbindung geräuscharm betreibbar weiterzubilden.

Erfindungsgemäß wird die Aufgabe bei der nach den in Anspruch 1 angegebenen Merkmalen gelöst.

Wichtige Merkmale der Erfindung bei der Welle-Nabe-Verbindung sind, dass die drehbar gelagerte Welle eine Außenverzahnung aufweist und die Nabe eine Innenverzahnung,
wobei die Nabe mit ihrer Innenverzahnung derart auf die Welle mit Außenverzahnung aufgesteckt ist, dass die Außenverzahnung mit der Innenverzahnung im Eingriff ist,
wobei die Welle eine Ringnut, insbesondere eine in Umfangsrichtung vollständig und/oder ununterbrochen umlaufende Ringnut, aufweist,
insbesondere wobei die Welle drehfest mit der Nabe verbunden ist und in axialer Richtung relativ zur Nabe verschiebbar angeordnet ist,
wobei eine Ringfeder, insbesondere ein Federring, in der Ringnut angeordnet ist,
wobei
   - die Ringnut insbesondere mittig in der Außenverzahnung eingebracht ist und/oder
   - der von der Ringnut in axialer Richtung überdeckte Bereich von dem von der Außenverzahnung in axialer Richtung überdeckten Bereich umfasst ist.

Von Vorteil ist dabei, dass mittels der Ringfeder eine spielfreie Welle-Nabe-Verbindung erreicht ist und somit die durch Drehzahlschwankungen hervorgerufenen Geräusche unterdrückt sind. Außerdem ist die Ringfeder in der Ringnut formschlüssig gesichert und somit verliersicher angeordnet. Darüber hinaus ist die Ringfeder innerhalb der Nut einklemmbar und dadurch auch selbst spielfrei in der Ringnut angeordnet. Somit erzeugt auch die Ringfeder keine Klappergeräusche, insbesondere auch nicht bei Drehzahlschwankungen.

Die Ringfeder ist auch als Federring bezeichenbar. Allerdings ist die Steigung in axialer Richtung eine monoton steigende Funktion, insbesondere eine lineare Funktion, des Umfangswinkels. Nur der Radialabstand der Ringfeder ist eine periodische Funktion des Umfangswinkels.

**Erfindungsgemäß** weist die Ringfeder einen bezogen auf die Drehachse der Welle maximalen Radialabstand auf, der eine veränderliche Funktion, insbesondere periodische Funktion, des Umfangswinkels ist,
insbesondere wobei an den lokalen Minima der Funktion die Ringfeder am Nutboden der Ringnut anliegt,
insbesondere wobei die lokalen Maxima der Funktion in Umfangsrichtung zwischen jeweils zwei Zähnen der Innenverzahnung der Nabe angeordnet sind. Von Vorteil ist dabei, dass die Ringfeder beim Aufschieben der Nabe auf die Welle in radialer Richtung elastisch gespannt wird und somit kein Spiel zwischen Welle und Nabe in radialer Richtung zulässt.

Bei einer vorteilhaften Ausgestaltung ist die Ringfeder aus einem Metalldraht gefertigt, insbesondere als Biegeteil,
insbesondere wobei der Drahtdurchmesser des Metalldrahtes konstant ist, insbesondere vom Umfangswinkel nicht abhängt, insbesondere, sondern eine konstante Funktion des
Umfangswinkels ist. Von Vorteil ist dabei, dass eine kostengünstige Herstellung erreichbar ist und die Standzeit der Ringfeder hoch ist. Außerdem ist auch bei hohen Temperaturen ein Betrieb ermöglicht. Denn Metall ist im Vergleich zu Gummi oder Kunststoff bei viel höheren Temperaturen elastisch verformbar, insbesondere also reversibel elastisch verformbar.

Bei einer vorteilhaften Ausgestaltung weist die Ringfeder eine Steigung auf und/oder einen Schrägungswinkel. Von Vorteil ist dabei, dass die Ringfeder zwischen den Nutwänden sich elastisch hält und somit axial verliersicher positioniert ist. Somit ist die Ringfeder innerhalb der Ringnut einklemmbar und dadurch auch selbst spielfrei in der Ringnut angeordnet. Somit erzeugt auch die Ringfeder keine Klappergeräusche, insbesondere auch nicht bei Drehzahlschwankungen.

Bei einer vorteilhaften Ausgestaltung weist die Ringfeder mit zunehmendem Umfangswinkel eine zunehmende, insbesondere eine zum Umfangswinkel proportional zunehmende, axiale Position auf,
insbesondere wobei die axiale Richtung parallel zur Drehachse der Welle ausgerichtet ist. Von Vorteil ist dabei, dass die Ringfeder zwischen den Nutwänden sich elastisch hält und somit axial verliersicher positioniert ist. Somit ist die Ringfeder innerhalb der Ringnut einklemmbar und dadurch auch selbst spielfrei in der Ringnut angeordnet. Somit erzeugt auch die Ringfeder keine Klappergeräusche, insbesondere auch nicht bei Drehzahlschwankungen.

Bei einer vorteilhaften Ausgestaltung ist die Ringfeder elastisch gespannt zwischen den Nutwänden der Ringnut angeordnet. Von Vorteil ist dabei, dass die Ringfeder verliersicher angeordnet ist.

Bei einer vorteilhaften Ausgestaltung drücken die beiden Enden der Ringfeder in den Nutboden der Ringnut. Von Vorteil ist dabei, dass eine hohe Haftreibung und somit stabile Positionierung erreichbar ist.

Bei einer vorteilhaften Ausgestaltung weist die Nabe, insbesondere die Innenverzahnung der Nabe, insbesondere nur an ihrem ersten axialen Endbereich, eine Fase auf, insbesondere wobei die Fase derart ausgeführt ist, dass der lichte Innendurchmesser, insbesondere der kleinste lichte Innendurchmesser, der Innenverzahnung in axialer Richtung mit zunehmendem Abstand vom ersten axialen Ende der Innenverzahnung zunimmt, insbesondere proportional zum Abstand vom ersten axialen Ende der Innenverzahnung. Von Vorteil ist dabei, dass die Nabe in Aufschieberichtung zunächst eingefädelt und danach beim weiteren axial gerichteten Aufschieben auf die Ringfeder aufgleitet, so dass diese dann nach radial innen elastisch verformt wird, insbesondere also auf den Nutboden der Ringnut aufgedrückt wird. Die so erzeugte elastische Federkraft der Ringfeder unterdrückt dann ein Spiel zwischen Welle und Nabe.

Bei einer vorteilhaften Ausgestaltung ist die Innenverzahnung und die Außenverzahnung jeweils als Geradverzahnung ausgeführt. Von Vorteil ist dabei, dass ein axiales Aufschieben der Welle auf die Nabe ermöglicht ist.

Bei einer vorteilhaften Ausgestaltung ist die Innenverzahnung und die Außenverzahnung jeweils als Evolventenverzahnung ausgeführt. Von Vorteil ist dabei, dass eine kostengünstige und hochpräzise Herstellung ermöglicht ist.

Bei einer vorteilhaften Ausgestaltung überdeckt die Ringfeder in Umfangsrichtung einen Umfangswinkelbetrag von weniger als 360°, insbesondere einen Umfangswinkelbetrag zwischen 200° und 340°. Von Vorteil ist dabei, dass ein schnelles und einfaches Einstecken der Ringfeder in die Ringnut ermöglicht ist.

Wichtige Merkmale bei der Bremsanordnung mit einer Welle-Nabe-Verbindung sind, dass die Welle ein Mitnehmer einer Bremsanordnung ist und die Nabe ein Bremsbelagträger einer Bremsanordnung ist,
wobei die Welle ein Hohlwellenteil ist.

Von Vorteil ist dabei, dass der Bremsbelagträger geräuscharm mit der Welle verbindbar ist, insbesondere auch bei Auftreten von Drehzahlschwankungen im Betrieb. Trotzdem ist der

Bremsbelagträger axial verschiebbar angeordnet, so dass beim Einfallen oder Lüften der Bremse der Bremsbelagträger entsprechend axial positionierbar ist.

Bei einer vorteilhaften Ausgestaltung ist der Mitnehmer auf eine Rotorwelle eines Elektromotors aufgesteckt und drehfest mit der Rotorwelle verbunden,
wobei die Rotorwelle drehbar gelagert ist relativ zu einem Gehäuseteil des Elektromotors. Von Vorteil ist dabei, dass nicht die Rotorwelle selbst, sondern der Mitnehmer eine Außenverzahnung benötigt. Die Drehfeste Verbindung zwischen Mitnehmer und Rotorwelle ist vorzugsweise durch eine kostengünstige Passfederverbindung bewirkbar.

Bei einer vorteilhaften Ausgestaltung weist die Bremsanordnung einen Magnetkörper auf, der drehfest mit dem Gehäuseteil, insbesondere mit dem Flanschteil des Elektromotors oder mit dem mit einem Flanschteil des Elektromotors drehfest verbundenen Teil, verbunden ist,
wobei im Magnetkörper eine elektrisch bestrombare Spule aufgenommen ist,
wobei eine Ankerscheibe, insbesondere in Umfangsrichtung, drehfest mit dem Magnetkörper verbunden ist und axial verschiebbar zum Magnetkörper angeordnet ist, insbesondere mittels mit dem Magnetkörper fest verbundener, durch Ausnehmungen der Ankerscheibe hindurchragender Bolzen,
wobei der Bremsbelagträger, insbesondere in Umfangsrichtung, drehfest mit dem Mitnehmer verbunden ist und axial verschiebbar zum Mitnehmer angeordnet ist,
wobei die Ankerscheibe axial zwischen dem Bremsbelagträger und dem Magnetkörper angeordnet ist,
wobei am Magnetkörper abgestützte Federelemente auf die Ankerscheibe drücken,
wobei der Bremsbelagträger axial zwischen einer Bremsfläche und der Ankerscheibe angeordnet ist. Von Vorteil ist dabei, dass die Bremswirkung bei Stromausfall automatisch eintritt und somit eine hohe Sicherheit erreichbar ist. Das Lüften der Bremse ist durch Bestromung der Spule ermöglicht.

Bei einer vorteilhaften Ausgestaltung ist am Gehäuseteil die Bremsfläche ausgebildet. Von Vorteil ist dabei, dass eine effiziente Wärmeabfuhr der Bremswärme an die Umgebung erreichbar ist.

Bei einer vorteilhaften Ausgestaltung wird bei Bestromung der Spule die Ankerscheibe entgegen der von den Federelementen erzeugten Federkraft zum Magnetkörper hingezogen und bei Nichtbestromung der Spule drücken die Federelemente die Ankerscheibe zum Bremsbelagträger hin, so dass der Bremsbelagträger mit seiner, von der Ankerscheibe abgewandten Seite auf die Bremsfläche gedrückt wird. Von Vorteil ist dabei, dass die Bremswirkung bei Stromausfall automatisch eintritt und somit eine hohe Sicherheit erreichbar ist. Das Lüften der Bremse ist durch Bestromung der Spule ermöglicht.

Bei einer vorteilhaften Ausgestaltung weist der Bremsbelagträger nur an dem der Ankerscheibe zugewandten axialen Endbereich seiner Innenverzahnung eine Fase auf. Von Vorteil ist dabei, dass die Fase nur an dem für das Aufschieben vorgesehenen Endbereich notwendig ist.

Bei einer anderen vorteilhaften Ausgestaltung weist der Bremsbelagträger nur an dem von der Ankerscheibe abgewandten axialen Endbereich seiner Innenverzahnung eine Fase auf. Von Vorteil ist dabei, dass die Fase nur an dem für das Aufschieben vorgesehenen Endbereich notwendig ist.

Bei einer vorteilhaften Ausgestaltung ist die Fase derart ausgeführt, dass der lichte Innendurchmesser, insbesondere der kleinste lichte Innendurchmesser, der Innenverzahnung in axialer Richtung mit zunehmendem Abstand vom ersten axialen Ende der Innenverzahnung zunimmt, insbesondere proportional zum Abstand vom ersten axialen Ende der Innenverzahnung. Von Vorteil ist dabei, dass eine einfache Herstellung der Fase ermöglicht ist und die radiale Kraftkomponente der Federkraft mit dem axialen Verschiebeweg proportional zunimmt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

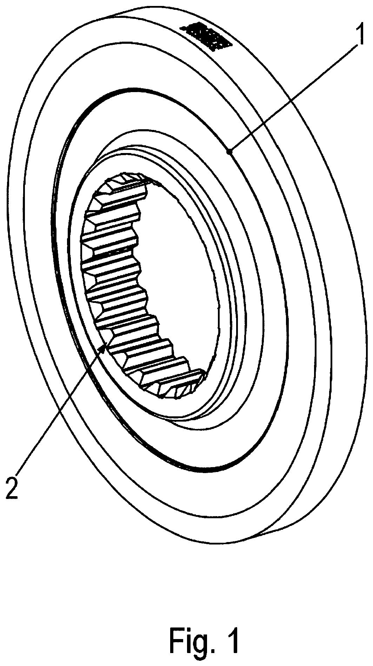

In der Figur 1 ist eine als Bremsbelagträger ausgeführte Nabe einer Welle-Nabe-Verbindung insbesondere einer Bremsanordnung in Schrägansicht dargestellt.

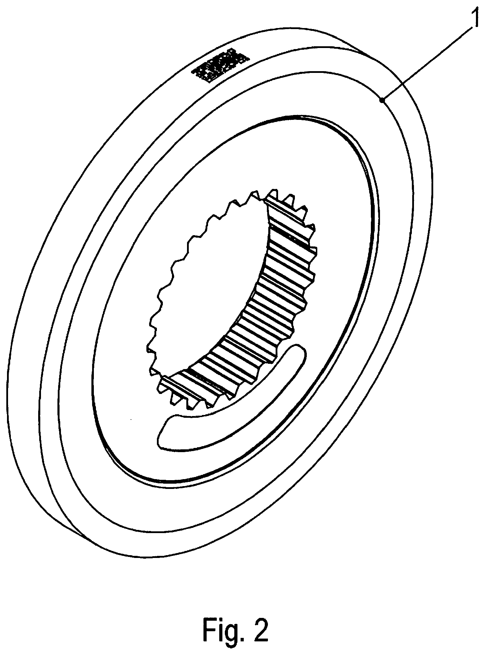

In der Figur 2 ist die Nabe aus einem anderen Blickwinkel in Schrägansicht dargestellt.

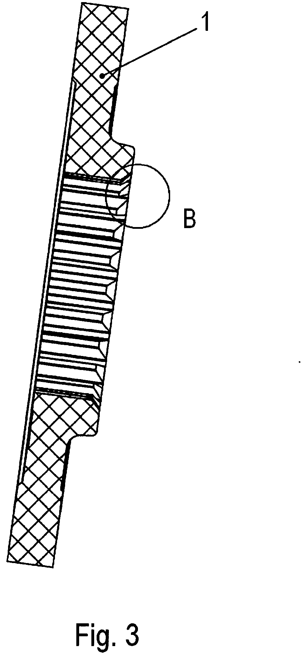

In der Figur 3 ist ein Querschnitt der Nabe dargestellt.

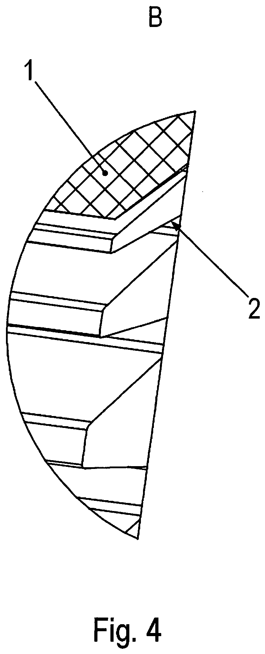

In der Figur 4 ist ein Bereich aus Figur vergrößert dargestellt.

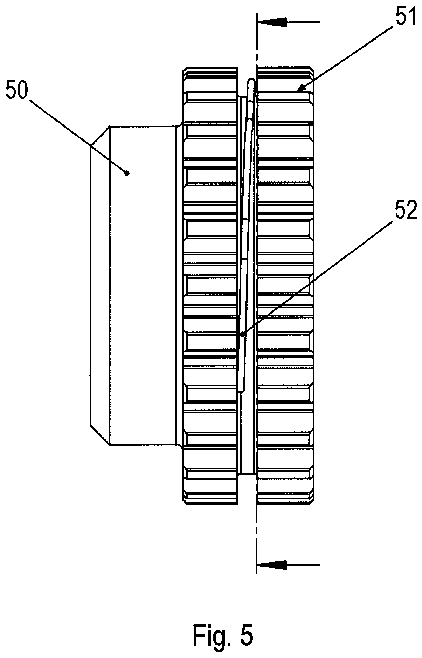

In der Figur 5 ist eine als angeschnittener Mitnehmer 50 ausgeführte Welle in Seitenansicht dargestellt, in dessen Außenverzahnung 51 eine Ringfeder in einer umlaufenden Ringnut aufgenommen ist.
In der Figur 6 ist eine Draufsicht auf die quergeschnittene Welle dargestellt.

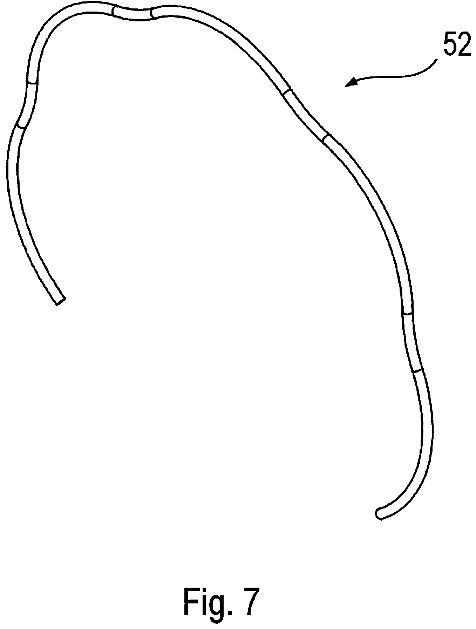

In der Figur 7 ist die Ringfeder 52 in Schrägansicht dargestellt.

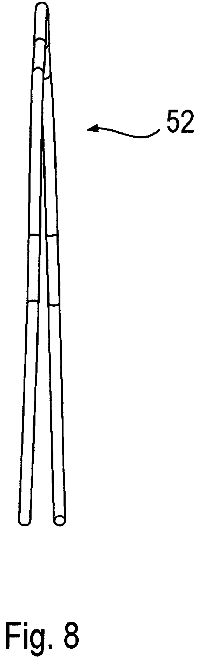

In der Figur 8 ist eine Seitenansicht der Ringfeder 52 dargestellt.

Wie in den Figuren gezeigt, ist eine Welle mit einer Außenverzahnung 51 ausgeführt, auf welche eine Nabe derart aufgesteckt ist, dass eine Innenverzahnung der Nabe mit der Außenverzahnung 51 im Eingriff ist und somit die Nabe axial beweglich, aber in Umfangsrichtung formschlüssig mit der Welle verbunden ist. Innerhalb der Außenverzahnung 51 ist eine in axialer Richtung vorzugsweise mittig innerhalb der Außenverzahnung angeordnete, in Umfangsrichtung vollständig umlaufende Ringnut angeordnet. In der Ringnut ist eine Ringfeder 52 aufgenommen.

Diese Ringfeder 52 ist aus einem Metalldraht gefertigt und in Umfangsrichtung nicht vollständig umlaufend ausgeführt.

Die Ringfeder 52 überdeckt in Umfangsrichtung einen Umfangswinkelbetrag von weniger als 360°, insbesondere einen Umfangswinkelbetrag zwischen 200° und 340°.

Die Ringfeder 52 weist einen insbesondere maximalen Radialabstand auf, der in Abhängigkeit vom Umfangswinkel periodisch variiert und/oder veränderlich ist.

Der Drahtdurchmesser ist entlang der Ringfeder 52 im Wesentlichen konstant.

Die Ringfeder 52 weist eine nicht verschwindende Steigung auf, so dass als die axiale Position der Ringfeder mit zunehmendem Umfangswinkel zunimmt. Somit ist ein elastisches Einklemmen zwischen den in axialer Richtung und entgegen der axialen Richtung an an der Ringnut ausgebildeten Nutwänden ermöglicht.

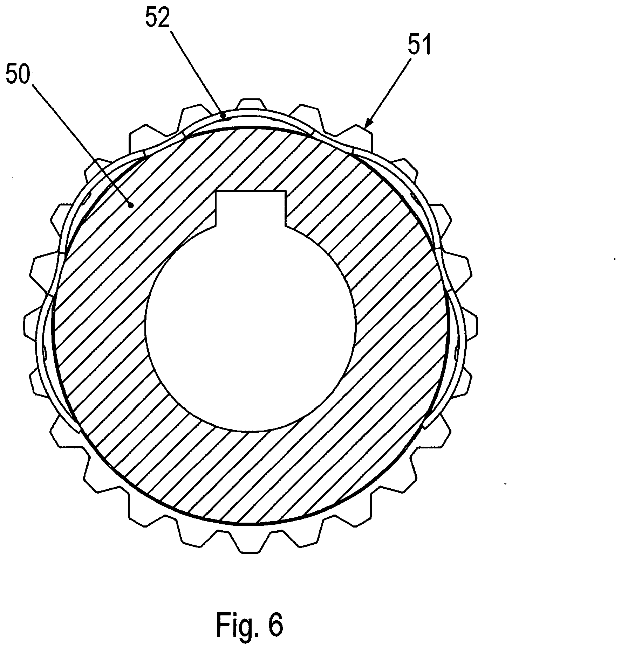

Außerdem drücken die beiden Enden der Ringfeder 52 nach radial innen auf den Nutboden der Ringnut, wie in Figur 6 deutlich erkennbar. Somit ist ein verbessertes Haften der Ringfeder 52 an der Welle erreicht.

Beim axial gerichteten Aufstecken der Nabe mit ihrer Innenverzahnung auf die Außenverzahnung 51 ermöglicht eine an der Nabe ausgeformte Fase 2 ein Aufgleiten der nach radial innen hervorstehenden Zähne der Innenverzahnung auf die Ringfeder 52. Dabei wird die Ringfeder 52 nach radial innen gedrückt, insbesondere zum Nutboden der Ringnut hin. Die Ringfeder 52 wird dabei elastisch gespannt und erzeugt eine entsprechend nach radial außen wirkende Federkraft, welche in die Nabe eingeleitet wird.

Somit ist die Nabe mit der Welle in Umfangsrichtung formschlüssig verbunden und in axialer Richtung ist die Welle relativ zur Nabe verschiebbar angeordnet. Das radial gerichtete Spiel ist mittels der elastisch gespannten Ringfeder 52 beseitigt.

Durch das elastisch vorgespannte Anliegen der Ringfeder 52 an beiden Nutwänden der Ringnut ist die Ringfeder 52 spielfrei in der Ringnut angeordnet.

In einer beispielhaften Anwendung dieser erfindungsgemäßen Welle-Nabe-Verbindung ist die Nabe als Bremsbelagträger 1 eine elektromagnetisch betätigbaren Bremsanordnung ausgeführt und die Welle als Mitnehmer 50 dieser Bremsanordnung.

Dabei der Mitnehmer 50 als außenverzahnte Hohlwelle ausgeführt und auf eine Rotorwelle eines Elektromotors aufgesteckt und drehfest, insbesondere mittels Passfederverbindung, mit der Rotorwelle verbunden.

Die Außenverzahnung des Mitnehmers 50 ist vorzugsweise als Rändelung ausgeführt oder als axial gerichtete, also den Schrägungswinkel Null aufweisende Evolventenverzahnung.

Der von der Ringfeder 52 überdeckte Radialabstandsbereich ist von dem von den Zähnen der Außenverzahnung 51 überdeckten Radialabstandsbereich umfasst. Somit ragen die Zähne radial über der Ringfeder 52 hervor. Alternativ ist die Ringnut am Mitnehmer 50 radial tiefer eingeschnitten als die Verzahnung, so dass der von der Ringfeder 52 überdeckte Radialabstandsbereich mit dem von den Zähnen der Außenverzahnung 51 überdeckten Radialabstandsbereich überlappt.

Die Fase 2 ist nur an einem der beiden axialen Endbereiche der Innenverzahnung des Bremsbelagträgers 1 angeordnet. Insbesondere ist somit die Aufsteckrichtung zum Aufstecken des Bremsbelagträgers 1 auf den Mitnehmer 50 vorgegeben.

Der Bremsbelagträger 1 weist axial beidseitig einen Bremsbelag auf.

Die Rotorwelle ist mittels Lagern drehbar gelagert, die in Flanschteilen aufgenommen sind, welche mit dem Statorgehäuse des Elektromotors verbunden sind.

Die Bremsanordnung weist eine Bremsfläche auf, die entweder an einem der Flanschteile selbst ausgebildet ist, insbesondere fein bearbeitet ist, oder an einem mit einem ersten der Flanschteile verbundenen Teil.

Ein Magnetkörper der Bremsanordnung ist drehfest mit dem Teil oder Flanschteil verbunden.

Im Magnetkörper ist eine vorzugsweise als Ringwicklung ausgeführte Spule aufgenommen. Hierzu ist vorzugsweise eine ringförmige oder topfförmige Ausnehmung in den Magnetkörper eingebracht, in welche die Spule eingelegt und mit Vergussmasse umgossen ist.

Die Ringachse der Ringwicklung ist parallel zur axialen Richtung ausgerichtet.

Eine Ankerscheibe ist drehfest mit dem Magnetkörper verbunden und dabei axial verschiebbar angeordnet. Vorzugsweise sind hierzu axial ausgerichtete Bolzen mit dem Magnetkörper verbunden, welche durch entsprechende Ausnehmungen der Ankerscheibe hindurchragen. Auf diese Weise ist mittels der Bolzen der Magnetkörper verbindbar mit dem Teil oder mit dem Flanschteil.

Die Ankerscheibe ist aus ferromagnetischem Material gefertigt.

Die Ankerscheibe ist in axialer Richtung zwischen dem Magnetkörper angeordnet. Der Bremsbelagträger 1 ist in axialer Richtung zwischen der Bremsfläche und der Ankerscheiben angeordnet.

Am Magnetkörper abgestützte, elastisch verformte Federelemente drücken auf die Ankerscheibe.

Somit wird bei Bestromung der Spule die Ankerscheibe entgegen der von den Federelementen erzeugten Federkraft zum Magnetkörper hingezogen. Somit ist der Bremsbelagträger 1 freigestellt und die Bremsanordnung ist gelüftet.

Außerdem drücken die Federelemente bei Nicht-Bestromung der Spule die Ankerscheibe weg vom Magnetkörper hin zum Bremsbelagträger, der somit an seiner von der Ankerscheibe abgewandten Seite auf die Bremsfläche gedrückt wird und die Bremsanordnung fällt somit ein, insbesondere leitet sie also ein Bremsmoment in die Rotorwelle ein.

Die Ringfeder 52 ist auch als Federring bezeichenbar.

Bei weiteren erfindungsgemäßen Ausführungsbeispielen nimmt bei der Fase 2 der minimale Radialabstand der Innenverzahnung des Bremsbelagträgers nicht wie im in den den Figuren dargestellten Beispiel linear mit der axialen Position zu, sondern die Fase 2 ist gekrümmt ausgeführt. Somit erreicht die Innenverzahnung eine höhere Standzeit, insbesondere im Bereich der Fase.

### Bezugszeichenliste

1 Bremsbelagträger
2 Fase
50 Mitnehmer
51 Außenverzahnung
52 Ringfeder

## Patentansprüche

1. Welle-Nabe-Verbindung, mit einer Welle und einer Nabe,
wobei die Welle eine Außenverzahnung (51) aufweist und die Nabe eine Innenverzahnung, wobei die Nabe mit ihrer Innenverzahnung derart auf die Welle mit Außenverzahnung (51) aufgesteckt ist, dass die Außenverzahnung (51) mit der Innenverzahnung im Eingriff ist,
**wobei** die Welle eine Ringnut, insbesondere eine in Umfangsrichtung vollständig und/oder ununterbrochen umlaufende Ringnut, aufweist,
wobei eine Ringfeder (52), insbesondere ein Federring, in der Ringnut angeordnet ist,
**dadurch gekennzeichnet, dass**
**die Welle drehfest mit der Nabe verbunden ist und in axialer Richtung relativ zur Nabe verschiebbar angeordnet ist,**
wobei
- die Ringnut insbesondere mittig in der Außenverzahnung (51) eingebracht ist und
- der von der Ringnut in axialer Richtung überdeckte Bereich von dem von der Außenverzahnung (51) in axialer Richtung überdeckten Bereich umfasst ist,
**wobei die Ringfeder (52) einen bezogen auf die Drehachse der Welle maximalen Radialabstand aufweist, der eine veränderliche Funktion, insbesondere periodische Funktion, des Umfangswinkels ist.**

2. Welle-Nabe-Verbindung nach Anspruch 1,
**dadurch gekennzeichnet, dass**
an den lokalen Minima der Funktion die Ringfeder (52) am Nutboden der Ringnut anliegt,
insbesondere wobei die lokalen Maxima der Funktion in Umfangsrichtung zwischen jeweils zwei Zähnen der Innenverzahnung der Nabe angeordnet sind.

3. Welle-Nabe-Verbindung nach einem der vorangegangenen Ansprüche,
**dadurch gekennzeichnet, dass**
die Ringfeder (52) aus einem Metalldraht gefertigt ist, insbesondere als Biegeteil,
insbesondere wobei der Drahtdurchmesser des Metalldrahtes konstant ist, insbesondere vom Umfangswinkel nicht abhängt, insbesondere, sondern eine konstante Funktion des Umfangswinkels ist.

4. Welle-Nabe-Verbindung nach einem der vorangegangenen Ansprüche,
**dadurch gekennzeichnet, dass**
die Ringfeder (52) eine Steigung aufweist und/oder einen Schrägungswinkel
und/oder dass
die Ringfeder (52) mit zunehmendem Umfangswinkel eine zunehmende, insbesondere eine zum Umfangswinkel proportional zunehmende, axiale Position aufweist,
insbesondere wobei die axiale Richtung parallel zur Drehachse der Welle ausgerichtet ist.

5. Welle-Nabe-Verbindung nach einem der vorangegangenen Ansprüche,
**dadurch gekennzeichnet, dass**
die Ringfeder (52) elastisch gespannt zwischen den Nutwänden der Ringnut angeordnet ist.

6. Welle-Nabe-Verbindung nach einem der vorangegangenen Ansprüche,
**dadurch gekennzeichnet, dass**
die beiden Enden der Ringfeder (52) in den Nutboden der Ringnut drücken.

7. Welle-Nabe-Verbindung nach einem der vorangegangenen Ansprüche,
**dadurch gekennzeichnet, dass**
die Nabe, insbesondere die Innenverzahnung der Nabe, insbesondere nur an ihrem ersten axialen Endbereich eine Fase (2) aufweist,
insbesondere wobei die Fase (2) derart ausgeführt ist, dass der lichte Innendurchmesser, insbesondere der kleinste lichte Innendurchmesser, der Innenverzahnung in axialer Richtung mit zunehmendem Abstand vom ersten axialen Ende der Innenverzahnung zunimmt, insbesondere proportional zum Abstand vom ersten axialen Ende der Innenverzahnung.

8. Welle-Nabe-Verbindung nach einem der vorangegangenen Ansprüche,
**dadurch gekennzeichnet, dass**
die Innenverzahnung und die Außenverzahnung (51) jeweils als Geradverzahnung ausgeführt ist
und/oder dass
die Innenverzahnung und die Außenverzahnung (51) jeweils als Evolventenverzahnung ausgeführt ist.

9. Welle-Nabe-Verbindung nach einem der vorangegangenen Ansprüche,
**dadurch gekennzeichnet, dass**
die Ringfeder (52) in Umfangsrichtung einen Umfangswinkelbetrag von weniger als 360°, insbesondere einen Umfangswinkelbetrag zwischen 200° und 340, überdeckt°.

10. Bremsanordnung mit einer Welle-Nabe-Verbindung nach einem der vorangegangenen Ansprüche,
**dadurch gekennzeichnet, dass**
die Welle ein Mitnehmer (50) einer Bremsanordnung ist und die Nabe ein Bremsbelagträger (1) einer Bremsanordnung ist,
wobei die Welle ein Hohlwellenteil ist.

11. Bremsanordnung nach einem der vorangegangenen Ansprüche,
**dadurch gekennzeichnet, dass**
der Mitnehmer (50) auf eine Rotorwelle eines Elektromotors aufgesteckt und drehfest mit der Rotorwelle verbunden ist,
wobei die Rotorwelle drehbar gelagert ist relativ zu einem Gehäuseteil des Elektromotors.

12. Bremsanordnung nach einem der vorangegangenen Ansprüche,
**dadurch gekennzeichnet, dass**
die Bremsanordnung einen Magnetkörper aufweist, der drehfest mit dem Gehäuseteil, insbesondere mit dem Flanschteil des Elektromotors oder mit dem mit einem Flanschteil des Elektromotors drehfest verbundenen Teil, verbunden ist,
wobei im Magnetkörper eine elektrisch bestrombare Spule aufgenommen ist,
wobei eine Ankerscheibe, insbesondere in Umfangsrichtung, drehfest mit dem Magnetkörper verbunden ist und axial verschiebbar zum Magnetkörper angeordnet ist, insbesondere mittels mit dem Magnetkörper fest verbundener, durch Ausnehmungen der Ankerscheibe hindurchragender Bolzen,
wobei der Bremsbelagträger (1), insbesondere in Umfangsrichtung, drehfest mit dem Mitnehmer (50) verbunden ist und axial verschiebbar zum Mitnehmer (50) angeordnet ist,
wobei die Ankerscheibe axial zwischen dem Bremsbelagträger (1) und dem Magnetkörper angeordnet ist,
wobei am Magnetkörper abgestützte Federelemente auf die Ankerscheibe drücken,
wobei der Bremsbelagträger (1) axial zwischen einer Bremsfläche und der Ankerscheibe angeordnet ist.

13. Bremsanordnung nach einem der vorangegangenen Ansprüche,
**dadurch gekennzeichnet, dass**
am Gehäuseteil die Bremsfläche ausgebildet ist,
und/oder dass
bei Bestromung der spule die Ankerscheibe entgegen der von den Federelementen erzeugten Federkraft zum Magnetkörper hingezogen wird und bei Nichtbestromung der Spule die Federelemente die Ankerscheibe zum Bremsbelagträger (1) hindrücken, so dass der Bremsbelagträger (1) mit seiner, von der Ankerscheibe abgewandten Seite auf die Bremsfläche gedrückt wird.

14. Bremsanordnung nach einem der vorangegangenen Ansprüche,
**dadurch gekennzeichnet, dass**
der Bremsbelagträger (1) nur an dem der Ankerscheibe zugewandten axialen Endbereich seiner Innenverzahnung eine Fase (2) aufweist,
oder dass
der Bremsbelagträger (1) nur an dem von der Ankerscheibe abgewandten axialen Endbereich seiner Innenverzahnung eine Fase (2) aufweist.

15. Bremsanordnung nach einem der vorangegangenen Ansprüche,
**dadurch gekennzeichnet, dass**
die Fase (2) derart ausgeführt ist, dass der lichte Innendurchmesser, insbesondere der kleinste lichte Innendurchmesser, der Innenverzahnung in axialer Richtung mit zunehmendem Abstand vom ersten axialen Ende der Innenverzahnung zunimmt, insbesondere proportional zum Abstand vom ersten axialen Ende der Innenverzahnung.

## Claims

1. A shaft-hub connection having a shaft and a hub,
wherein the shaft has an external toothing (51) and the hub has an internal toothing, wherein the hub with its internal toothing is placed onto the shaft with external toothing (51) in such a manner that the external toothing (51) meshes with the internal toothing,
wherein the shaft has an annular groove, in particular an annular groove encircling in a circumferential direction in a complete and/or uninterrupted manner,
wherein an annular spring (52), in particular a spring ring, is arranged in the annular groove,
**characterised in that**
the shaft is connected to the hub in a rotationally-fixed manner and is arranged so as to be displaceable relative to the hub in an axial direction,
wherein
- the annular groove is made, in particular centrally, in the external toothing (51) and
- the region covered in an axial direction by the annular groove is encompassed by the region covered in an axial direction by the external toothing (51),
wherein the annular spring (52) has a maximum radial distance related to the rotational axis of the shaft, which distance is a variable function, in particular a periodic function, of the circumferential angle.

2. A shaft-hub connection according to claim 1,
**characterised in that**
at the local minima of the function, the annular spring (52) contacts the groove bottom of the annular groove,
in particular wherein the local maxima of the function are in a circumferential direction arranged between in each case two teeth of the internal toothing of the hub.

3. A shaft-hub connection according to any one of the preceding claims,
**characterised in that**
the annular spring (52) is manufactured from a metal wire, in particular in the form of a bent part,
in particular wherein the wire diameter of the metal wire is constant, in particular is not dependent on the circumferential angle, in particular rather is a constant function of the circumferential angle.

4. A shaft-hub connection according to any one of the preceding claims,
**characterised in that**
the annular spring (52) has a slope and/or a helix angle
and/or **in that**
the annular spring (52) has an increasing axial position as the circumferential angle increases, in particular an axial position increasing proportionally to the circumferential angle,
in particular wherein the axial direction is oriented parallel to the rotational axis of the shaft.

5. A shaft-hub connection according to any one of the preceding claims,
**characterised in that**
the annular spring (52) is arranged between the groove walls of the annular groove in an elastically tensioned manner.

6. A shaft-hub connection according to any one of the preceding claims,
**characterised in that**
the two ends of the annular spring (52) press into the groove bottom of the annular groove.

7. A shaft-hub connection according to any one of the preceding claims,
**characterised in that**
the hub, in particular the internal toothing of the hub, has a chamfer (2), in particular only at its first axial end-region,
in particular wherein the chamfer (2) is such that the inside diameter, in particular the smallest inside diameter, of the internal toothing increases in an axial direction as the distance from the first axial end of the internal toothing increases, in particular proportionally to the distance from the first axial end of the internal toothing.

8. A shaft-hub connection according to any one of the preceding claims,
**characterised in that**
the internal toothing and the external toothing (51) are in each case in the form of spur toothing
and/or **in that**
the internal toothing and the external toothing (51) are in each case in the form of involute toothing.

9. A shaft-hub connection according to any one of the preceding claims,
**characterised in that**
the annular spring (52) covers a circumferential angular amount of less than 360° in a circumferential direction, in particular a circumferential angular amount between 200° and 340.

10. A brake arrangement having a shaft-hub connection according to any one of the preceding claims,
**characterised in that**
the shaft is a driver (50) of a brake arrangement and the hub is a brake lining carrier (1) of a brake arrangement,
wherein the shaft is a hollow shaft part.

11. A brake arrangement according to any one of the preceding claims,
**characterised in that**
the driver (50) is placed onto a rotor shaft of an electric motor and is connected to the rotor shaft in a rotationally-fixed manner,
wherein the rotor shaft is rotatably mounted relative to a housing part of the electric motor.

12. A brake arrangement according to any one of the preceding claims,
**characterised in that**
the brake arrangement has a magnetic body which is connected in a rotationally-fixed manner to the housing part, in particular to the flange part of the electric motor or to the part connected in a rotationally-fixed manner to a flange part of the electric motor,
wherein the magnetic body receives a coil energisable electrically,
wherein an armature plate is, in particular in a circumferential direction, connected to the magnetic body in a rotationally-fixed manner and is arranged in an axially displaceable manner with respect to the magnetic body, in particular by means of bolts which are securely connected to the magnetic body and which project through cutouts in the armature plate,
wherein the brake lining carrier (1) is, in particular in a circumferential direction, connected to the driver (50) in a rotationally-fixed manner and is arranged in an axially displaceable manner with respect to the driver (50),
wherein the armature plate is arranged axially between the brake lining carrier (1) and the magnetic body,
wherein spring elements supported on the magnetic body press onto the armature plate,
wherein the brake lining carrier (1) is arranged axially between a brake surface and the armature plate.

13. A brake arrangement according to any one of the preceding claims,
**characterised in that**
the brake surface is formed on the housing part,
and/or **in that**
the armature plate is upon energisation of the coil pulled towards the magnetic body counter to the spring force generated by the spring elements and the spring elements push the armature plate towards the brake lining carrier (1) upon non-energisation of the coil, so that the side of the brake lining carrier (1) remote from the armature plate is pushed onto the brake surface.

14. A brake arrangement according to any one of the preceding claims,
**characterised in that**
the brake lining carrier (1) has a chamfer (2) only at the axial end-region, facing the armature plate, of its internal toothing,
or **in that**
the brake lining carrier (1) has a chamfer (2) only at the axial end-region, remote from the armature plate, of its internal toothing.

15. A brake arrangement according to any one of the preceding claims,
**characterised in that**
the chamfer (2) is configured such that the inside diameter, in particular the smallest inside diameter, of the internal toothing increases in an axial direction as the distance from the first axial end of the internal toothing increases, in particular proportionally to the distance from the first axial end of the internal toothing.

## Revendications

1. Connexion arbre-moyeu, comprenant un arbre et un moyeu,
l'arbre présentant une denture extérieure (51) et le moyeu présentant une denture intérieure, la denture intérieure du moyeu étant enfichée sur la denture extérieure (51) de l'arbre de telle manière que la denture extérieure (51) est en prise avec la denture intérieure,
l'arbre présentant une rainure annulaire, en particulier une rainure annulaire circonférentielle complète et/ou ininterrompue dans la direction circonférentielle,
un ressort annulaire (52), en particulier une rondelle ressort, étant agencé dans la rainure annulaire,
**caractérisée en ce que**
l'arbre est relié de manière solidaire en rotation au moyeu et est agencé de manière à pouvoir coulisser dans la direction axiale par rapport au moyeu,
- la rainure annulaire étant insérée en particulier au centre de la denture extérieure (51) et
- la région couverte par la rainure annulaire dans la direction axiale appartenant à la région couverte par la denture extérieure (51) dans la direction axiale,
le ressort annulaire (52) présentant une distance radiale maximale, par rapport à l'axe de rotation de l'arbre, qui est une fonction variable, en particulier une fonction périodique, de l'angle inscrit.

2. Connexion arbre-moyeu selon la revendication 1,
**caractérisée en ce que**
au niveau des minima locaux de la fonction, le ressort annulaire (52) repose sur le fond de rainure de la rainure annulaire,
les maxima locaux de la fonction étant en particulier agencés entre respectivement deux dents de la denture intérieure du moyeu dans la direction circonférentielle.

3. Connexion arbre-moyeu selon l'une quelconque des revendications précédentes, **caractérisée en ce que**
le ressort annulaire (52) est fabriqué à partir d'un fil métallique, en particulier sous la forme d'une pièce pliée,
le diamètre de fil du fil métallique étant en particulier constant, en particulier ne dépendant pas de l'angle inscrit, mais étant en particulier une fonction constante de l'angle inscrit.

4. Connexion arbre-moyeu selon l'une quelconque des revendications précédentes, **caractérisée en ce que**
le ressort annulaire (52) présente une pente et/ou un angle d'inclinaison et/ou **en ce que**
le ressort annulaire (52) présente une position axiale croissante, en particulier croissante de manière proportionnelle à l'angle inscrit, à mesure que l'angle inscrit augmente,
la direction axiale étant en particulier parallèle à l'axe de rotation de l'arbre (8).

5. Connexion arbre-moyeu selon l'une quelconque des revendications précédentes, **caractérisée en ce que**
le ressort annulaire (52) est agencé de manière élastiquement contrainte entre les parois de rainure de la rainure annulaire.

6. Connexion arbre-moyeu selon l'une quelconque des revendications précédentes, **caractérisée en ce que**
les deux extrémités du ressort annulaire (52) appuient contre le fond de rainure de la rainure annulaire.

7. Connexion arbre-moyeu selon l'une quelconque des revendications précédentes, **caractérisée en ce que**
le moyeu, en particulier la denture intérieure du moyeu, ne présente en particulier un chanfrein (2) qu'au niveau de sa première région d'extrémité axiale,
le chanfrein (2) étant en particulier réalisé de telle manière que le diamètre intérieur libre, en particulier le plus petit diamètre intérieur libre, de la denture intérieure augmente dans la direction axiale à mesure que la distance par rapport à la première extrémité axiale de la denture intérieure augmente, en particulier de manière proportionnelle à la distance par rapport à la première extrémité axiale de la denture intérieure.

8. Connexion arbre-moyeu selon l'une quelconque des revendications précédentes, **caractérisée en ce que**
la denture intérieure et la denture extérieure (51) sont respectivement réalisées sous la forme d'une denture droite
et/ou **en ce que**
la denture intérieure et la denture extérieure (51) sont respectivement réalisées sous la forme d'une denture à développante.

9. Connexion arbre-moyeu selon l'une quelconque des revendications précédentes, **caractérisée en ce que**
le ressort annulaire (52) couvre, dans la direction circonférentielle, une valeur d'angle inscrit inférieure à 360°, en particulier une valeur d'angle inscrit comprise entre 200° et 340°.

10. Ensemble de freinage comprenant une connexion arbre-moyeu selon l'une quelconque des revendications précédentes,
**caractérisé en ce que**
l'arbre est un entraîneur (50) d'un système de freinage et le moyeu est un support de garniture de frein (1) d'un système de freinage,
l'arbre étant une pièce formant arbre creux.

11. Système de freinage selon l'une quelconque des revendications précédentes, **caractérisé en ce que**
l'entraîneur (50) est enfiché sur un arbre de rotor d'un moteur électrique et est relié de manière solidaire en rotation à l'arbre de rotor,
l'arbre de rotor étant monté rotatif par rapport à une partie carter du moteur électrique.

12. Système de freinage selon l'une quelconque des revendications précédentes, **caractérisé en ce que**
l'ensemble de freinage présente un corps magnétique qui est relié de manière solidaire en rotation à la partie carter, en particulier à la partie bride du moteur électrique ou à la partie reliée de manière solidaire en rotation à une partie bride du moteur électrique, une bobine pouvant être alimentée en électricité étant accueillie dans le corps magnétique,
un disque d'induit étant relié de manière solidaire en rotation, en particulier dans la direction circonférentielle, au corps magnétique et étant agencé de manière à pouvoir coulisser axialement par rapport au corps magnétique, en particulier au moyen de boulons reliés de manière solidaire au corps magnétique et traversant des évidements du disque d'induit,
le support de garniture de frein (1) étant relié de manière solidaire en rotation, en particulier dans la direction circonférentielle, à l'entraîneur (50) et étant agencé de manière à pouvoir coulisser axialement par rapport à l'entraîneur (50),
le disque d'induit étant agencé axialement entre le support de garniture de frein (1) et le corps magnétique,
des éléments formant ressort étant soutenus au niveau du corps magnétique et appuyant sur le disque d'induit (46),
le support de garniture de frein (1) étant agencé axialement entre une surface de frein et le disque d'induit.

13. Système de freinage selon l'une quelconque des revendications précédentes, **caractérisé en ce que**
la surface de freinage est réalisée au niveau de la partie carter,
et/ou **en ce que**
lorsque la bobine est alimentée en courant, le disque d'induit est tiré vers le corps magnétique à l'encontre de la force de ressort générée par les éléments formant ressort et, lorsque la bobine n'est pas alimentée en courant, les éléments formant ressort poussent le disque d'induit vers le support de garniture de frein (1), de sorte que le côté du support de garniture de frein (1) qui est opposé au disque d'induit est pressé sur la surface de freinage.

14. Système de freinage selon l'une quelconque des revendications précédentes, **caractérisé en ce que**
le support de garniture de frein (1) ne présente un chanfrein (2) qu'au niveau de la région d'extrémité axiale, tournée vers le disque d'induit, de sa denture intérieure,
ou **en ce que**
le support de garniture de frein (1) ne présente un chanfrein (2) qu'au niveau de la région d'extrémité axiale, opposée au disque d'induit, de sa denture intérieure.

15. Système de freinage selon l'une quelconque des revendications précédentes, **caractérisé en ce que**
le chanfrein (2) est en particulier réalisé de telle manière que le diamètre intérieur libre, en particulier le plus petit diamètre intérieur libre, de la denture intérieure augmente dans la direction axiale à mesure que la distance par rapport à la première extrémité axiale de la denture intérieure augmente, en particulier de manière proportionnelle à la distance par rapport à la première extrémité axiale de la denture intérieure.
